# EUROPEAN PATENT APPLICATION

(11) **EP 4 832 200 A1**
(43) Date of publication of application: **28.10.2026**
(21) Application number: 24934431.8
(22) Date of filing: 08.04.2024
(51) Int. Cl.: H01M 50/249, H02J 7/00, B60L 50/64

(54) **CONTROL BOX, ENERGY STORAGE APPARATUS AND ELECTRICAL SYSTEM**

(71) Applicant: Contemporary Amperex Technology Co., Limited, Ningde, Fujian 352100 (CN)
(72) Inventor: WANG, Lei, Ningde, Fujian 352100 (CN); ZHANG, Kaiwen, Ningde, Fujian 352100 (CN); ZHAO, Danmin, Ningde, Fujian 352100 (CN)
(74) Representative: Lorenz Seidler Gossel Part. mbB
(86) International application number: PCT/CN2024/086680
(87) International publication number: WO 2025/213345

(57) **Abstract**

The present application relates to a control box, an energy storage apparatus and an electrical system. The control box comprises at least two control modules and wiring assemblies, wherein each of the control modules is used for controlling the battery state of a battery cluster, the control module comprises a switch assembly and a connecting end that is electrically connected to the switch assembly, and the switch assembly is configured to control the connection/disconnection of the connecting end; and the wiring assemblies are used for connecting the control modules to the battery cluster, the wiring assemblies are arranged corresponding to the control modules, each of the wiring assemblies comprises terminals, which are electrically connected to the connecting end, respectively. According to the control box, the energy storage apparatus and an electrical device provided in the embodiments of the present application, the control box can control a plurality of battery clusters at the same time, such that the volume of an applied energy storage apparatus is reduced, thereby improving the energy density of the energy storage apparatus.

## Description

### TECHNICAL FIELD

The present application relates to the technical field of energy storage, and in particular, to a control box, an energy storage apparatus, and an electrical system.

### BACKGROUND

An energy storage apparatus refers to an apparatus that stores energy temporarily or permanently. In recent years, new energy vehicles have made a leap forward in development. In the field of electric vehicles, power batteries, as power sources of electric vehicles, play an irreplaceable and important role. A common energy storage apparatus utilizes a power battery for storing electrical energy, and a control box included in the energy storage apparatus can be used to control a battery cluster.

In the related art, a control box has limited control capability. When used in an energy storage apparatus, a plurality of control boxes need to be provided to achieve control of a plurality of battery clusters, which increases the volume of the energy storage apparatus and is not conducive to the improvement of the energy density of the energy storage apparatus.

### SUMMARY OF THE INVENTION

Embodiments of the present application provide a control box, an energy storage apparatus, and an electrical system. The control box is capable of simultaneously controlling a plurality of battery clusters, thereby reducing the volume of the energy storage apparatus in which they are applied and improving the energy density of the energy storage apparatus.

In one aspect, an embodiment of the present application provides a control box, including: at least two control modules, and wiring assemblies, the control modules being used for controlling battery status of battery clusters, the control modules each including a switch assembly and a connection terminal electrically connected to the switch assembly, where the switch assembly is configured to control connection/disconnection of the connection terminal; and the wiring assemblies being used for connecting the control modules to the battery clusters, the wiring assemblies being provided corresponding to the control modules, and the wiring assemblies each including a terminal, where the terminals are respectively electrically connected to the connection terminals.

In the technical solution of the embodiments of the present application, each control module includes a switch assembly and a connection terminal electrically connected to the switch assembly, where the connection terminal may be connected to the battery cluster via the connected terminal, so as to control battery status of the battery cluster. Since the control box includes at least two control modules, when used in an energy storage apparatus, it can be simultaneously connected to a plurality of battery clusters within the energy storage apparatus via different control modules, without the need to provide one control box correspondingly for each battery cluster, so that the number of control boxes used in the energy storage apparatus can be reduced, thereby reducing the volume of the energy storage apparatus and increasing the energy density thereof.

In some embodiments, the control box further includes a box, the control modules being disposed within the box, and the wiring assemblies being disposed on a box wall.

In the control box according to an embodiment of the present application, through the aforementioned arrangement, the plurality of control modules can be protected using the box, thereby ensuring safety and structural compactness of the control box. Meanwhile, the wiring assemblies are disposed on the box wall, which facilitates fixing of the wiring assemblies and also facilitates connection between the terminals of the wiring assemblies and the battery clusters.

In some embodiments, the box wall has a first wall surface, and the terminals of the respective wiring assemblies are all disposed on the first wall surface.

In a control box according to an embodiment of the present application, by disposing the terminals of the wiring assemblies corresponding to the respective control modules all on the first wall surface, when the control box is installed to the energy storage apparatus, the terminals can be made to all face a side, such as a door body, that facilitates arbitrary wiring operation, thereby reducing difficulty in connection and maintenance of lines.

In some embodiments, the connection terminal includes a first connection port, a second connection port, a third connection port, and a fourth connection port that are connected to the switch assembly, and the switch assembly is configured to control connection/disconnection between the first connection port and the second connection port and to control connection/disconnection between the third connection port and the fourth connection port, the first connection port and the third connection port being used for connecting to the battery cluster, and the second connection port and the fourth connection port being used for connecting to an external device.

In the control box according to an embodiment of the present application, through the aforementioned arrangement, the control module can be connected to the battery cluster and the external device via the connection terminal, and the switch assembly is utilized to control the connection/disconnection between the first connection port and the second connection port and the connection/disconnection between the third connection port and the fourth connection port, thereby enabling connection or disconnection between the battery cluster and the external device, and ensuring the power supply and power-off requirements of the external device.

In some embodiments, the terminal includes a first terminal portion and a second terminal portion, the first terminal portion being used for connecting the control module to the battery cluster, and the second terminal portion being used for connecting the control module to the external device.

In the control box according to an embodiment of the present application, through the aforementioned arrangement, the connection terminal of each control module may be connected to the battery cluster via the first terminal portion, and may be connected to the external device via the second terminal portion, thereby facilitating the routing of connection lines between the control box and the battery clusters and the external device.

In some embodiments, the first terminal portions of the respective wiring assemblies are disposed on the same side of the box along a first direction and are distributed at intervals along a second direction, the first direction intersecting with the second direction.

In the control box according to an embodiment of the present application, through the aforementioned arrangement, when the control box is connected to the plurality of battery clusters, the wirings connected to the battery clusters can all be connected from one side of the control box in the first direction, which is beneficial to the layout of the battery clusters electrically connected to the same control box, and can also ensure the regularity of the wirings.

In some embodiments, the box has a first side wall and a second side wall disposed opposite to each other in the first direction, an interface of each of the first terminal portions being disposed facing the first side wall, and along the second direction and from one side toward the other side, minimum perpendicular distances from the respective first terminal portions to the second side wall gradually decreasing.

In the control box according to an embodiment of the present application, through the aforementioned arrangement, along the second direction and from one side toward the other side, the respective first terminal portions are disposed gradually away from the second side wall, such that along the second direction, the wiring connected to an upper first terminal portion can avoid the wiring connected to a lower connected first terminal portion, thereby reducing the probability of overlapping among the wirings connected to the respective first terminal portions.

In some embodiments, the first connection port and the third connection port of each of the control modules are separately connected with the first terminal portions, and along the second direction, the first terminal portions connected to the first connection ports and the first terminal portions connected to the third connection ports are alternately disposed.

In the control box according to an embodiment of the present application, through the aforementioned arrangement, the two first terminal portions connected to each battery cluster are adjacently disposed in the second direction, which is beneficial to the layout of the plurality of battery clusters connected to the same control box and satisfaction of the requirement of electrical connection with the corresponding control module.

In some embodiments, the second terminal portions of the respective wiring assemblies are disposed on a side of the box opposite to the respective first terminal portions along the first direction, the respective second terminal portions are distributed at intervals along the first direction, and two adjacent ones of the second terminal portions are disposed in a staggered manner in the second direction.

In the control box according to an embodiment of the present application, through the aforementioned arrangement, the connection between the control modules and the external device is facilitated, thereby ensuring satisfaction of the requirement of connection/disconnection between the battery clusters and the external device.

In some embodiments, the second connection port and the fourth connection port of each of the control modules are separately connected with the second terminal portions, and the box has a third side wall and a fourth side wall disposed opposite to each other in the second direction, where interfaces of the respective second terminal portions being disposed facing the fourth side wall, a minimum perpendicular distance from the second terminal portion connected to the second connection port to the third side wall is H1, and a minimum perpendicular distance from the second terminal portion connected to the fourth connection port to the third side wall is H2, an absolute value of a difference between H1 and H2 being greater than zero.

In the control box according to an embodiment of the present application, through the aforementioned arrangement, the layout of the second terminal portions connected to the second connection ports and the second terminal portions connected to the fourth connection ports on the first wall surface is facilitated, and at the same time, the arrangement of external lines connected to each second terminal portion is facilitated, thereby ensuring satisfaction of the requirement of electrical connection with the external device.

In some embodiments, the switch assembly includes a first switch and a second switch, the first switch being connected to the first connection port and the second connection port, and the second switch being connected to the third connection port and the fourth connection port.

In the control box according to an embodiment of the present application, through the aforementioned arrangement, the connection/disconnection between the first connection port and the second connection port can be controlled by the first switch, and the connection/disconnection between the third connection port and the fourth connection port can be controlled by the second switch, which is beneficial to ensuring satisfaction of the requirement of electrical connection between the battery clusters and the external device via the control modules, thereby further ensuring satisfaction of the requirements of monitoring and charging and discharging the battery clusters, and the like.

In some embodiments, each of the control modules further includes a pre-charging branch and a third switch, the third switch being connected in parallel with the first switch, the pre-charging branch being connected in parallel with the second switch, and the pre-charging branch including a pre-charging resistor and a fourth switch that are arranged in series.

In the control box according to an embodiment of the present application, through the aforementioned arrangement, before the switch assembly is closed to cause the first connection port and the second connection port to be conductive and the third connection port and the fourth connection port to be conductive, the third switch and the fourth switch can be closed first, so that the pre-charging resistor is first connected into the loop for pre-charging.

In some embodiments, each of the control modules further includes a current detector, the current detector being used for detecting current information of a loop in which the control module is located.

In the control box according to an embodiment of the present application, by providing the current detector, the current value of the loop in which the control module is located can be monitored, and the safety of the control box can be judged according to changes in the current value.

In some embodiments, each of the control modules further includes a first relay, the first relay being used for controlling connection/disconnection of the loop in which the control module is located.

In the control box according to an embodiment of the present application, by providing the first relay, it helps to ensure the connection/disconnection of the loop in which the control module is located.

In another aspect, an embodiment of the present application provides an energy storage apparatus, including a cabinet, battery clusters, and the control box. The cabinet has an accommodating cavity; at least two battery clusters are disposed in the accommodating cavity, and each of the battery clusters includes an interface terminal; and each of the battery clusters is provided corresponding to one of the control modules, and the interface terminal of the battery cluster is electrically connected to the connection terminal of the correspondingly provided control module.

In the technical solution of the embodiments of the present application, since the energy storage apparatus includes the control box according to the aforementioned embodiments and at least two battery clusters, and since a plurality of control modules are disposed in the cavity of the control box, the control box can be simultaneously connected to the at least two battery clusters in the energy storage apparatus in a one-to-one manner via the different control modules, without the need to provide one control box correspondingly for each battery cluster. Under the condition of the same number of battery clusters, the energy storage apparatus according to an embodiment of the present application can reduce the number of applied control boxes, thereby reducing the volume of the energy storage apparatus itself and improving the energy density thereof.

In some embodiments, the number of the control boxes is plural, and the respective battery clusters electrically connected to the at least two control modules of the same control box are stacked along the same direction.

In the energy storage apparatus according to an embodiment of the present application, through the aforementioned arrangement, under the condition of the same specification and size of the cabinet, the energy storage apparatus can be enabled to have a larger electric quantity, thereby further improving the energy density of the energy storage apparatus.

In some embodiments, the at least two battery clusters and the control box are stacked along a height direction.

In the energy storage apparatus according to an embodiment of the present application, through the aforementioned arrangement, the arrangement of the respective battery clusters connected to the respective control modules of the same control box and the connection and wiring requirements with the terminals of the corresponding control box are facilitated, and meanwhile, the size of the cabinet can be effectively reduced, thereby ensuring the energy density of the energy storage apparatus.

In some embodiments, the control box is disposed, along a height direction, above, in the middle of, or below the at least two battery clusters.

In the energy storage apparatus according to an embodiment of the present application, through the aforementioned arrangement, the layout of the battery clusters and the control box within the energy storage apparatus is made compact, and the length of the connection lines between the battery clusters and the terminals of the control box can be shortened.

In yet another aspect, according to an embodiment of the present application, an electrical system includes the aforementioned energy storage apparatus.

### BRIEF DESCRIPTION OF THE DRAWINGS

Hereinafter, the features, advantages, and technical effects of the exemplary embodiments of the present application will be described with reference to the drawings.
FIG. 1 is a schematic structural diagram of a vehicle according to some embodiments of the present application;
FIG. 2 is a schematic structural diagram of an energy storage apparatus according to some embodiments of the present application;
FIG. 3 is a schematic circuit diagram of a control box according to some embodiments of the present application;
FIG. 4 is a schematic circuit diagram of a control box according to some other embodiments of the present application;
FIG. 5 is a schematic structural diagram of a control box according to some embodiments of the present application;
FIG. 6 is a schematic structural diagram of a control box according to some other embodiments of the present application; and
FIG. 7 is a schematic structural diagram of an energy storage apparatus according to some other embodiments of the present application.

In the drawings:
100 - energy storage apparatus; 200 - controller; 300 - motor;
10 - control box;
11 - box; 111 - first wall surface; 1111 - first side wall; 1112 - second side wall; 1113 - third side wall; 1114 - fourth side wall;
12 - control module;
121 - switch assembly; 1211 - first switch; 1212 - second switch;
122 - connection terminal; 1221 - first connection port; 1222 - second connection port; 1223 - third connection port; 1224 - fourth connection port;
123 - pre-charging branch; 1231 - pre-charging resistor; 1232 - fourth switch;
124 - third switch;
125 - current detector;
126 - first relay;
127 - first electrode bus; 128 - second electrode bus;
13 - wiring assembly; 131 - terminal; 131a - first terminal portion; 131b - second terminal portion;
20 - cabinet; 201 - accommodating cavity; 202 - base; 203 - top;
30 - battery cluster; 31 - battery;
X - first direction; Y - second direction.

In the drawings, identical components are denoted by identical reference signs. The drawings are not drawn to actual scale.

### DETAILED DESCRIPTION

The embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

It should be noted that, unless otherwise specified, the technical or scientific terms used in the embodiments of the present application should have the usual meanings as understood by those skilled in the art to which the embodiments of the present application belong.

In the description of the embodiments of the present application, orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationships shown in the accompanying drawing, and are only for the convenience of describing the embodiments of the present application and simplifying the description, and do not indicate or imply that the apparatus or element referred to must have a specific orientation or be constructed and operated in a specific orientation, and therefore cannot be construed as a restriction on the embodiments of the present application.

In addition, the technical terms "first," "second," etc. are used for descriptive purposes only, and cannot be construed as indicating or implying a relative importance, or implicitly specifying the number of the indicated technical features. In the description of the embodiments of the present application, the meaning of "a plurality of" is two or more, unless otherwise explicitly and specifically defined.

In the description of the embodiments of the present application, unless otherwise explicitly specified and defined, the technical terms "mount," "couple," "connect," "fix", etc., should be understood in a broad sense, for example, a fixed connection, a detachable connection, or an integral connection; or a mechanical connection, or an electrical connection; or a direct connection, an indirect connection through an intermediate medium, or an internal communication of two elements, or interaction between two elements. For those of ordinary skill in the art, the specific meanings of the aforementioned terms in the embodiments of the present application can be understood according to specific situations.

In the description of the embodiments of the present application, unless otherwise explicitly specified and defined, the expression a first feature being "on" or "under" a second feature may be a case that the first feature is in direct contact with the second feature, or the first feature is in indirect contact with the second feature via an intermediate medium. Furthermore, the expression the first feature being "over," "above" and "on top of" the second feature may be a case that the first feature is directly above or obliquely above the second feature, or only means that the level of the first feature is higher than that of the second feature. The expression the first feature being "below", "underneath" or "under" the second feature may be a case that the first feature is directly underneath or obliquely underneath the second feature, or only means that the level of the first feature is lower than that of the second feature.

An energy storage apparatus refers to an apparatus that stores energy temporarily or permanently. In recent years, new energy vehicles have made a leap forward in development. In the field of electric vehicles, energy storage apparatuses, as power sources of electric vehicles, play an irreplaceable and important role.

The energy storage apparatus may include a control box and battery clusters. The battery clusters may include at least one battery. The included control box may be connected to the battery clusters. The control box is used for controlling and managing the batteries of the battery clusters, for example, may be used for controlling a switching state of the battery clusters.

In the energy storage apparatus in the related art, the improvement of the energy density thereof is relatively difficult, and problems such as low energy density exist. Further research has found that, with the continuous development and innovation of the energy storage apparatus technology, the battery capacity of the battery cluster thereof is also continuously improved, which puts higher requirements on the system grouping efficiency of battery clusters. Correspondingly, since the control box in the related art has a limited control capability, when used in an energy storage apparatus, a plurality of control boxes need to be provided to connect to and control a plurality of battery clusters in a one-to-one manner, which increases the volume of the energy storage apparatus. This is not only detrimental to the standardization of the energy storage apparatus and the reduction of transportation costs, but also the occupation of space by the plurality of control boxes is not conducive to the improvement of the energy density of the energy storage apparatus.

In order to alleviate the problem of difficulty in improving the energy density of the energy storage apparatus, research has found that, on the basis of satisfying the control requirements for the battery clusters, this can be achieved by reducing the overall occupied volume of the battery box used for controlling the respective battery clusters. Based on the above consideration, a control box is designed, including: at least two control modules, and wiring assemblies, the control modules being used for controlling battery status of battery clusters, the control modules each including a switch assembly and a connection terminal electrically connected to the switch assembly, where the switch assembly is configured to control connection/disconnection of the connection terminal; and the wiring assemblies being used for connecting the connection terminals of the control modules to the battery clusters, the wiring assemblies being provided corresponding to the control modules, and the wiring assemblies each including a terminal, where the terminals are respectively electrically connected to the connection terminals. In such a control box, since the control box includes at least two control modules, when used in an energy storage apparatus, it can be simultaneously connected to a plurality of battery clusters within the energy storage apparatus via different control modules, without the need to provide one control box correspondingly for each battery cluster, so that the number of control boxes used in the energy storage apparatus can be reduced, thereby reducing the volume of the energy storage apparatus, enabling the overall dimensions of the energy storage apparatus to be limited within a certain range, reducing transportation costs, and improving, reducing, and improving the energy density thereof.

The control box disclosed in the embodiments of the present application can be used in an energy storage apparatus, and the provided energy storage apparatus can be used in, but is not limited to, an electrical system such as a vehicle, a ship, or an aircraft. The embodiments of the present application provide an electrical system using an energy storage apparatus as a power source. The electrical system may be, but is not limited to, an electric tool, an electric scooter, an electric vehicle, a ship, a spacecraft, etc. Among them, the spacecraft may include an aircraft, a rocket, a space shuttle, a spaceship, etc.

For the convenience of description, the following embodiments are described by taking an electrical system according to an embodiment of the present application being a vehicle as an example.

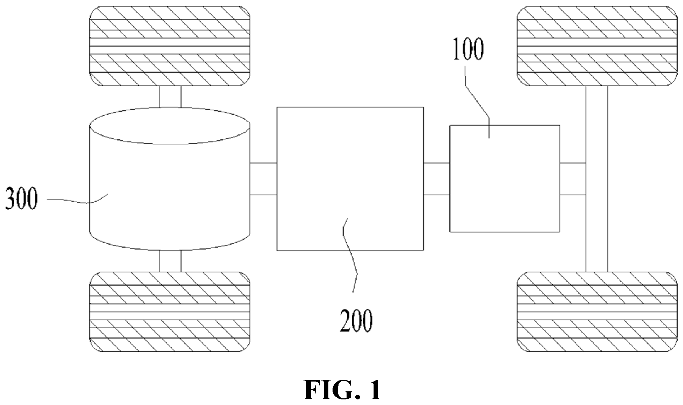

Please refer to FIG. 1. FIG. 1 is a schematic structural diagram of a vehicle according to some embodiments of the present application. The vehicle may be a fuel vehicle, a gas vehicle, or a new energy vehicle. The new energy vehicle may be a pure electric vehicle, a hybrid electric vehicle, or an extended-range electric vehicle, etc. The vehicle is internally provided with an energy storage apparatus 100. The energy storage apparatus 100 may be disposed at the bottom, the head, or the tail of the vehicle. The energy storage apparatus 100 can be used for power supply of the vehicle. For example, the energy storage apparatus 100 can serve as an operation power source of the vehicle. The vehicle may further include a controller 200 and a motor 300, the controller 200 being used to control the energy storage apparatus 100 to supply power to the motor 300, for example, for the working power consumption requirements during starting, navigation, and traveling of the vehicle.

In some embodiments of the present application, the energy storage apparatus 100 can not only serve as an operation power source of the vehicle, but also can serve as a driving power source of the vehicle, replacing or partially replacing fuel or natural gas to provide driving power for the vehicle.

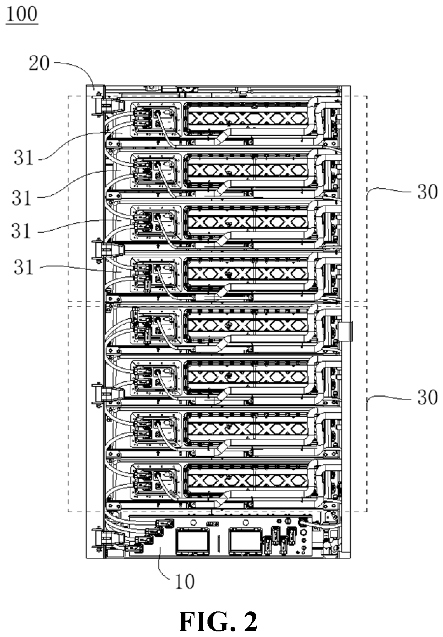

Please refer to FIG. 2. FIG. 2 is a schematic structural diagram of an energy storage apparatus 100 according to some embodiments of the present application.

An energy storage apparatus 100 according to an embodiment of the present application includes a cabinet 20, at least two battery clusters 30, and a control box 10,, the at least two battery clusters 30 being disposed within the cabinet 20, and the battery clusters 30 being connected to the control box 10.

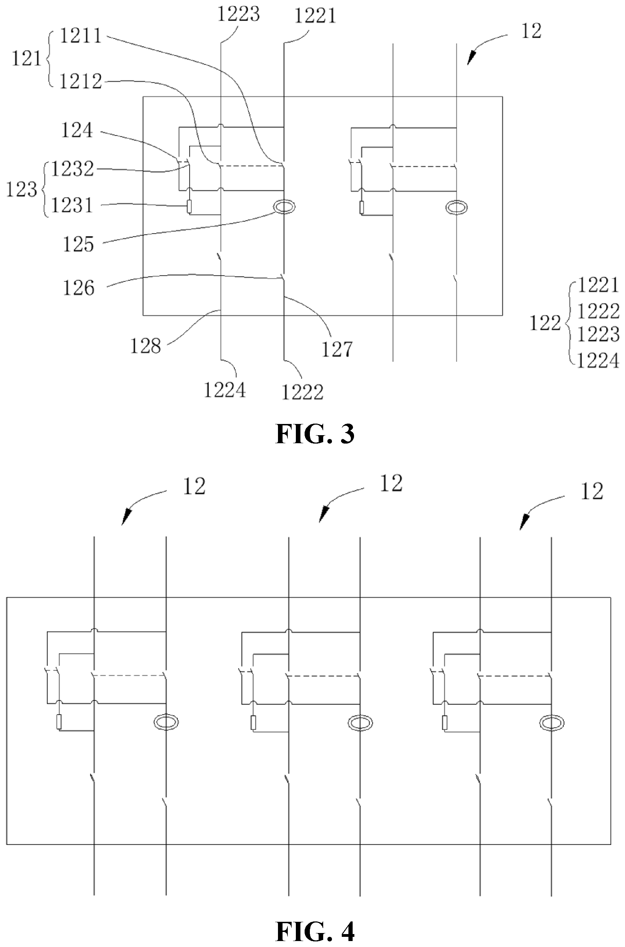

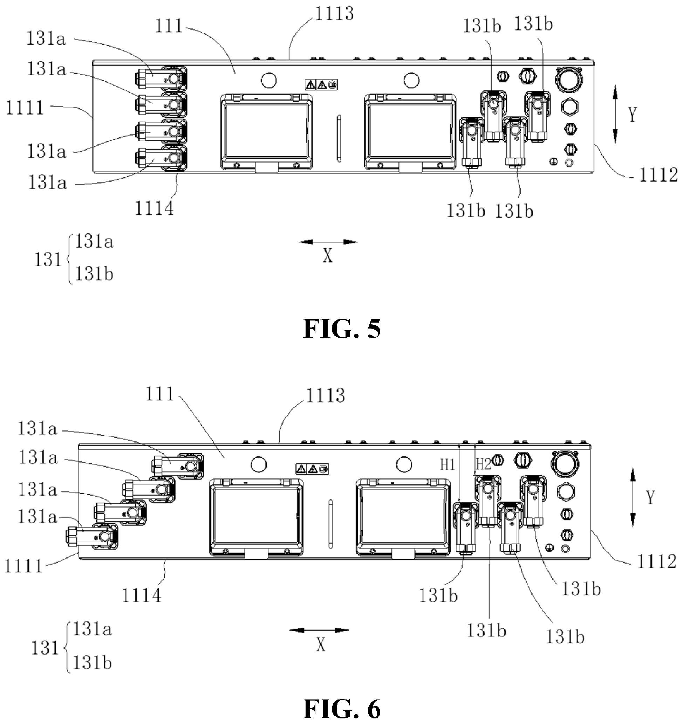

Please refer to FIG. 3 to FIG. 5. FIG. 3 is a schematic circuit diagram of a control box according to some embodiments of the present application, FIG. 4 is a schematic circuit diagram of a control box according to some other embodiments of the present application, and FIG. 5 is a schematic structural diagram of a control box according to some embodiments of the present application.

A control box 10 provided in an embodiment of the present application includes: at least two control modules 12, and wiring assemblies 13, the control modules 12 being used for controlling battery status of battery clusters 30, the control modules 12 each including a switch assembly 121 and a connection terminal 122 electrically connected to the switch assembly 121, where the switch assembly 121 is configured to control connection/disconnection of the connection terminal 122; and the wiring assemblies 13 being used for connecting the control modules 12 to the battery clusters 30, the wiring assemblies 13 being provided corresponding to the control modules 12, and the wiring assemblies 13 each including a terminal 131, where the terminals 131 are respectively electrically connected to the connection terminals 122.

As shown in FIG. 3, the number of the control modules 12 included in the control box 10 may be two, which is, of course, an optional implementation. As shown in FIG. 4, the number of the control modules 12 included in the control box 10 may be three. It can be understood that the number of the control modules 12 included in the control box 10 may also be more, and can specifically be determined according to the number of the battery clusters 30 to be connected.

The connection terminal 122 may be a general term for a plurality of connection ports of the control module 12, and that the switch assembly 121 is configured to control connection/disconnection of the connection terminal 122 may be understood as: the switch assembly 121 is configured to control connection/disconnection between different connection ports of the connection terminal 122. For example, the connection terminal 122 may include a plurality of connection ports, where every two connection ports form a group and may be divided into two groups, three groups, or more groups, and the switch assembly 121 can control connection/disconnection between the two connection ports of each group.

The wiring assembly 13 functions as an adapter and can be used for connecting the connection terminal 122 of the control module 12 with an interface of the battery cluster 30. The number of the terminals may be no less than the number of the connection ports included in the connection terminal 122, and a terminal 131 may be electrically connected at each connection port of the connection terminal 122.

That the wiring assemblies 13 are provided corresponding to the control modules 12 may be understood as: the number of the wiring assemblies 13 and the number of the control modules 12 may be equal and the wiring assemblies and the control modules may be provided in a one-to-one correspondence.

The mentioned battery status includes, but is not limited to, at least one of a switching state of a battery of the battery cluster, a power consumption state of the battery, reading of voltage, current, temperature information of the battery of the battery cluster, and the like.

In the control box 10 according to an embodiment of the present application, the control module 12 thereof includes a switch assembly 121 and a connection terminal 122 electrically connected to the switch assembly 121, where the connection terminal 122 may be connected to the battery cluster 30 via the connected terminal 131, so as to realize control of the switching state of the battery cluster 30. Since the control box 10 includes at least two control modules 12, when used in an energy storage apparatus 100, it can be simultaneously connected to a plurality of battery clusters 30 within the energy storage apparatus 100 via different control modules 12, without the need to provide one control box 10 correspondingly for each battery cluster 30, so that the number of control boxes 10 used in the energy storage apparatus 100 can be reduced, thereby reducing the volume of the energy storage apparatus 100 and increasing the energy density thereof.

As shown in FIG. 3 to FIG. 5, according to some embodiments of the present application, optionally, the control box 10 further includes a box 11, the control modules 12 being disposed within the box 11, and the wiring assemblies 13 being disposed on a box wall.

The box 11 included in the control box 10 may be a polyhedral structure, which may be a polyhedral structure of a regular shape, or may be a polyhedron in an irregular form.

The box 11 may have a cavity, and the box wall may be a wall portion enclosing and forming the cavity. For example, when the box 11 is a hexahedron, the box wall may be side walls located on respective faces of the box 11.

The wiring assemblies 13 being located on the box wall may specifically be located on an inner side of the box wall facing the internal cavity thereof, or may be located on an outer side of the box wall facing away from the internal cavity thereof, and optionally be located on the outer side of the box wall.

The wiring assemblies 13 and the box wall may be connected by a fastening manner using fasteners such as bolts, or may be connected by a manner such as bonding.

In the control box 10 according to an embodiment of the present application, through the aforementioned arrangement, the plurality of control modules 12 can be protected using the box 11, thereby ensuring safety and structural compactness of the control box 10. Meanwhile, the wiring assemblies 13 are disposed on the box wall, which facilitates fixing of the wiring assemblies 13 and also facilitates connection between the terminals 131 of the wiring assemblies 13 and the battery clusters 30.

As shown in FIG. 5, according to some embodiments of the present application, optionally, the box wall has a first wall surface 111, and the terminals 131 of the respective wiring assemblies 13 are all disposed on the first wall surface 111.

The first wall surface 111 may be a surface facing away from the internal cavity of the box 11, and may be one surface among a plurality of wall surfaces of the wall of the box 11.

That the terminals of the respective wiring assemblies 13 are all disposed on the first wall surface 111 may be understood as: the terminals 131 of all the wiring assemblies 13 provided corresponding to the respective control modules 12 may be located on the same wall surface of the box wall.

In a control box 10 according to an embodiment of the present application, by disposing the terminals 131 of the wiring assemblies 13 corresponding to the respective control modules 12 all on the first wall surface 111, when the control box 10 is installed to the energy storage apparatus 100, the terminals 131 can be made to all face a side, such as a door body, that facilitates arbitrary wiring operation, thereby reducing difficulty in connection and maintenance of lines.

As shown in FIG. 3 to FIG. 5, according to some embodiments of the present application, optionally, the connection terminal 122 of each control module 12 includes a first connection port 1221, a second connection port 1222, a third connection port 1223, and a fourth connection port 1224 that are connected to the switch assembly 121, and the switch assembly 121 is configured to control connection/disconnection between the first connection port 1221 and the second connection port 1222 and to control connection/disconnection between the third connection port 1223 and the fourth connection port 1224, the first connection port 1221 and the third connection port 1223 being used for connecting to the battery cluster 30, and the second connection port 1222 and the fourth connection port 1224 being used for connecting to an external device.

The first connection port 1221 and the second connection port 1222 may be oppositely disposed and connected via the switch assembly 121, and connection/disconnection between the first connection port 1221 and the second connection port 1222 can be achieved by opening or closing of the switch assembly 121.

The third connection port 1223 and the fourth connection port 1224 may be oppositely disposed and connected via the switch assembly 121, and connection/disconnection between the third connection port 1223 and the fourth connection port 1224 can be achieved by opening or closing of the switch assembly 121.

The external device includes, but is not limited to, a busbar of a container, an electrical component of a vehicle, etc.

The first connection port 1221 and the third connection port 1223 can be used for connecting to the interface terminals of the correspondingly provided battery cluster 30.

In the control box 10 according to an embodiment of the present application, through the aforementioned arrangement, the control module 12 can be connected to the battery cluster 30 and the external device via the connection terminal, and the switch assembly 121 is utilized to control the connection/disconnection between the first connection port 1221 and the second connection port 1222 and the connection/disconnection between the third connection port 1223 and the fourth connection port 1224, thereby enabling connection or disconnection between the battery cluster 30 and the external device, and ensuring the power supply and power-off requirements of the external device.

As shown in FIG. 3 to FIG. 5, according to some embodiments of the present application, optionally, the terminal 131 includes a first terminal portion 131a and a second terminal portion 131b, the first terminal portion 131a being used for connecting the control module 12 to the battery cluster 30, and the second terminal portion 131b being used for connecting the control module 12 to the external device.

The number of the first terminal portions 131a included in the terminal 131 may be one, or may be at least two, optionally at least two, and correspondingly, the number of the second terminal portions 131b included in the terminal 131 may be one, or may be at least two, optionally at least two. The numbers can specifically be determined according to the number of the connection ports included in the connection terminal 122 of each control module 12.

When the connection terminal 122 includes the first connection port 1221, the second connection port 1222, the third connection port 1223, and the fourth connection port 1224 that are connected to the switch assembly 121, a first terminal portion 131a may be connected at each of the first connection port 1221 and the third connection port 1223, and a second terminal portion 131b may be connected at each of the second connection port 1222 and the fourth connection port 1224. During operation, the polarities of the first terminal portion 131a and the second terminal portion 131b are opposite to that of the interface terminal of the connected battery cluster 30.

In the control box 10 according to an embodiment of the present application, through the aforementioned arrangement, the connection terminal 122 of each control module 12 may be connected to the battery cluster 30 via the first terminal portion 131a, and may be connected to the external device via the second terminal portion 131b, thereby facilitating the routing of connection lines between the control box 10 and the battery clusters 30 and the external device.

As shown in FIG. 5, according to some embodiments of the present application, optionally, the first terminal portions 131a of the respective wiring assemblies 13 are disposed on the same side of the box 11 along a first direction X and are distributed at intervals along a second direction Y, the first direction X intersecting with the second direction Y.

An included angle between the first direction X and the second direction Y may be any value between 85° and 95°, optionally 90°. That is, the first direction X and the second direction Y are optionally perpendicular to each other.

The box 11 may have two opposite sides in the first direction X and a center plane located between the two sides. Distances from the two side walls of the box 11 in the first direction X to the center plane may be equal. That the first terminal portions 131a of the respective wiring assemblies 13 are all located on one side of the box 11 in the first direction X may be understood as: the respective first terminal portions 131a are all located in a region between one of the side walls of the box 11 in the first direction X and the center plane, and the respective first terminal portions 131a do not go beyond the center plane.

In the control box 10 according to an embodiment of the present application, through the aforementioned arrangement, when the control box 10 is connected to the plurality of battery clusters 30, the wirings connected to the battery clusters 30 can all be connected from one side of the control box 10 in the first direction, which is beneficial to the layout of the battery clusters 30 electrically connected to the same control box 10, and can also ensure the regularity of the wirings.

As shown in FIG. 6, FIG. 6 is a schematic structural diagram of a control box according to some other embodiments of the present application.

According to some embodiments of the present application, optionally, the box 11 has a first side wall 1111 and a second side wall 1112 disposed opposite to each other in the first direction X, and the respective first terminal portions 131a are distributed at intervals along the second direction Y, an interface of each of the first terminal portions 131a being disposed facing the first side wall 1111, and along the second direction Y and from one side toward the other side, minimum perpendicular distances from the respective first terminal portions 131a to the second side wall 1112 gradually decreasing.

The respective first terminal portions 131a are disposed closer to the first side wall 1111 compared to the second terminal portions 131b.

Along the second direction Y and from one side toward the other side may be a side from top to bottom, or may be a side from bottom to top. This can be specifically set according to the layout when the control box 10 is installed in the energy storage apparatus 100. When installed in the energy storage apparatus 100, the first terminal portion 131a farthest from the second side wall 1112 may be disposed closer to the bottom of the cabinet 20 of the energy storage apparatus 100.

Along the second direction Y and from one side toward the other side, the minimum perpendicular distances from the respective first terminal portions 131a to the second side wall 1112 gradually decrease, so that the plurality of first terminal portions 131a can be arranged in a stepped manner along the second direction Y.

In the control box 10 according to an embodiment of the present application, through the aforementioned arrangement, along the second direction Y and from one side toward the other side, the respective first terminal portions 131a are disposed gradually away from the second side wall 1112, such that along the second direction Y, the wiring connected to an upper first terminal portion 131a can avoid the wiring connected to a lower connected first terminal portion 131a, thereby reducing the probability of overlapping among the wirings connected to the respective first terminal portions 131a.

According to some embodiments of the present application, optionally, the first connection port 1221 and the third connection port 1223 of each control module 12 are separately connected with the first terminal portions 131a, and along the second direction Y, the first terminal portions 131a connected to the first connection ports 1221 and the first terminal portions 131a connected to the third connection ports 1223 are alternately disposed.

Since the number of the control modules 12 included in the control box 10 is at least two, correspondingly, there are at least two groups of wiring assemblies 13, and the first connection port 1221 and the third connection port 1223 of each control module 12 are separately connected with the first terminal portions 131a included in the correspondingly provided wiring assembly 13.

Along the second direction Y, the first terminal portions 131a connected to the first connection ports 1221 and the first terminal portions 131a connected to the third connection ports 1223 are alternately disposed. As an example, along the second direction Y, the first terminal portions 131a connected to the first connection port 1221 and the third connection port 1223 of the same control module 12 may be adjacently distributed and may be distributed in a staggered manner in the second direction Y.

In the control box 10 according to an embodiment of the present application, through the aforementioned arrangement, the two first terminal portions 131a connected to each battery cluster 30 are adjacently disposed in the second direction Y, which is beneficial to the layout of the plurality of battery clusters 30 connected to the same control box 10 and satisfaction of the requirement of electrical connection with the corresponding control module 12.

As shown in FIG. 5 and FIG. 6, according to some embodiments of the present application, optionally, the second terminal portions 131b of the respective wiring assemblies 13 are disposed on a side of the box 11 opposite to the respective first terminal portions 131a along the first direction X, the respective second terminal portions 131b are distributed at intervals along the first direction X, and two adjacent ones of the second terminal portions 131b are disposed in a staggered manner in the second direction Y.

The second terminal portions 131b of the respective wiring assemblies 13 are disposed closer to the second side wall 1112 compared to the respective first terminal portions 131a along the first direction X.

That two adjacent second terminal portions 131b are disposed in a staggered manner in the second direction Y may be understood as: along the second direction Y, one of the two adjacent second terminal portions 131b is partially protruded relative to the other.

In the control box 10 according to an embodiment of the present application, through the aforementioned arrangement, the connection between the control modules 12 and the external device is facilitated, thereby ensuring satisfaction of the requirement of connection/disconnection between the battery clusters 30 and the external device.

As shown in FIG. 6, according to some embodiments of the present application, optionally, the second connection port 1222 and the fourth connection port 1224 of each of the control modules 12 are separately connected with the second terminal portions 131b, and the box 11 has a third side wall 1113 and a fourth side wall 1114 disposed opposite to each other in the second direction Y, where interfaces of the respective second terminal portions 131b are disposed facing the fourth side wall 1114, a minimum perpendicular distance from the second terminal portion 131b connected to the second connection port 1222 to the third side wall 1113 is H1, and a minimum perpendicular distance from the second terminal portion 131b connected to the fourth connection port 1224 to the third side wall 1113 is H2, an absolute value of a difference between H1 and H2 being greater than zero.

Since the number of the control modules 12 included in the control box 10 is at least two, correspondingly, the number of the second terminal portions 131b connected to the second connection ports 1222 and the number of the second terminal portions 131b connected to the fourth connection ports 1224 are each at least two. The respective second terminal portions 131b connected to the second connection port 1222 of each control module 12 may be disposed along the first direction X, and the respective second terminal portions 131b connected to the fourth connection port 1224 of each control module 12 may be disposed along the first direction X.

That the absolute value of the difference between H1 and H2 is greater than zero may allow H1 to be greater than H2, and of course, may also allow H1 to be less than H2.

In the control box 10 according to an embodiment of the present application, through the aforementioned arrangement, the layout of the second terminal portions 131b connected to the second connection ports 1222 and the second terminal portions 131b connected to the fourth connection ports 1224 on the box 11 is facilitated, and at the same time, the arrangement of external lines connected to each second terminal portion 131b is facilitated, thereby ensuring satisfaction of the requirement of electrical connection with the external device.

As shown in FIG. 3 and FIG. 4, according to some embodiments of the present application, optionally, the switch assembly 121 includes a first switch 1211 and a second switch 1212, the first switch 1211 being connected to the first connection port 1221 and the second connection port 1222, and the second switch 1212 being connected to the third connection port 1223 and the fourth connection port 1224.

The first switch 1211 and the second switch 1212 may be disposed independently of each other, and may be controlled to be turned on and turned off separately. Of course, the first switch 1211 and the second switch 1212 may also employ a double-throw switch and may be controlled to be turned on and turned off synchronously with each other.

Each control module 12 may include a first electrode bus 127 and a second electrode bus 128. Two ends of the first electrode bus 127 may form the first connection port 1221 and the second connection port 1222, and two ends of the second electrode bus 128 may form the third connection port 1223 and the fourth connection port 1224. The first switch 1211 can control connection/disconnection of the first electrode bus 127 and further control connection/disconnection between the first connection port 1221 and the second connection port 1222, and the second switch 1212 can control connection/disconnection of the second electrode bus 128 and further control connection/disconnection between the third connection port 1223 and the fourth connection port 1224. One of the first electrode bus 127 and the second electrode bus 128 is a positive electrode bus and the other is a negative electrode bus.

In the control box 10 according to an embodiment of the present application, through the aforementioned arrangement, the connection/disconnection between the first connection port 1221 and the second connection port 1222 can be controlled by the first switch 1211, and the connection/disconnection between the third connection port 1223 and the fourth connection port 1224 can be controlled by the second switch 1212, which is beneficial to ensuring satisfaction of the requirement of electrical connection between the battery clusters 30 and the external device via the control modules 12, thereby further ensuring satisfaction of the requirements of monitoring and charging and discharging the battery clusters 30, and the like.

As shown in FIG. 3 and FIG. 4, according to some embodiments of the present application, optionally, in some embodiments, each control module 12 further includes a pre-charging branch 123 and a third switch 124, the third switch 124 being connected in parallel with the first switch 1211, the pre-charging branch 123 being connected in parallel with the second switch 1212, and the pre-charging branch 123 including a pre-charging resistor 1231 and a fourth switch 1232 that are arranged in series.

The third switch 124 may be electrically connected to the connection terminal 122, and optionally may be electrically connected to the first connection port 1221 and the second connection port 1222.

The pre-charging branch 123 may be electrically connected to the connection terminal 122, and optionally may be electrically connected to the third connection port 1223 and the fourth connection port 1224.

In the control box 10 according to an embodiment of the present application, through the aforementioned arrangement, before the switch assembly 121 is closed to cause the first connection port 1221 and the second connection port 1222 to be conductive and the third connection port 1223 and the fourth connection port 1224 to be conductive, the third switch 124 and the fourth switch 1232 can be closed first, so that the pre-charging resistor 1231 is first connected into the loop for pre-charging.

According to some embodiments of the present application, optionally, each control module 12 further includes a current detector 125, the current detector 125 being used for detecting current information of a loop in which the control module 12 is located.

The current detector 125 may employ an instrument capable of detecting current information, such as a current sensor, an ammeter, etc.

The current detector 125 may be electrically connected to the switch assembly 121 and the connection terminal 122.

In the control box 10 according to an embodiment of the present application, by providing the current detector 125, the current value of the loop in which the control module 12 is located can be monitored, and the safety of the control box 10 can be judged according to changes in the current value, so that the control module 12 can also be used for reading the current and the like of the battery cluster 30 during an operation process.

As shown in FIG. 3 and FIG. 4, according to some embodiments of the present application, optionally, each control module 12 further includes a first relay 126, the first relay 126 being used for controlling connection/disconnection of the loop in which the control module 12 is located.

The first relay 126 may be connected between the switch assembly 121 and the connection terminal 122.

In the control box 10 according to an embodiment of the present application, by providing the first relay 126, it helps to ensure the connection/disconnection of the loop in which the control module 12 is located.

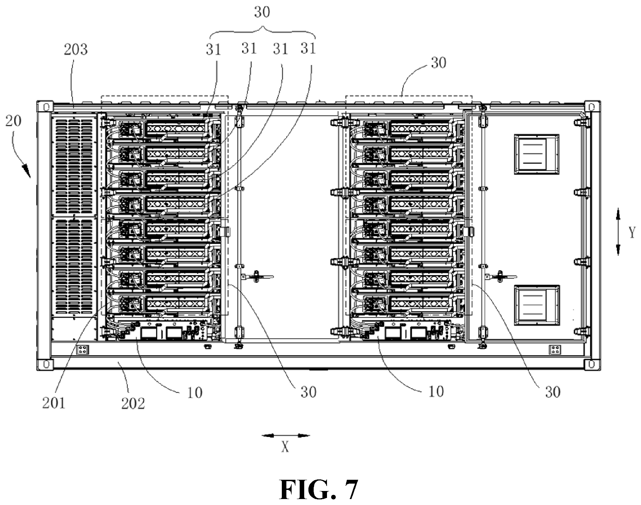

As shown in FIG. 7, FIG. 7 is a schematic structural diagram of an energy storage apparatus according to some other embodiments of the present application.

According to some embodiments of the present application, an embodiment of the present application further provides an energy storage apparatus 100, including a cabinet 20, battery clusters 30, and the control box 10 according to the aforementioned embodiments. The cabinet 20 has an accommodating cavity 201; at least two battery clusters 30 are disposed in the accommodating cavity 201, and each of the battery clusters 30 includes an interface terminal; and each of the battery clusters 30 is provided corresponding to one of the control modules 12, and the interface terminal of the battery cluster 30 is electrically connected to the connection terminal 122 of the correspondingly provided control module 12.

The shape of the cabinet 20 is not specifically limited, and it may be cylindrical, elliptical cylindrical, or polygonal cylindrical. The accommodating cavity 201 thereof may be an integral chamber, and the control box 10 may be located in the same chamber as the respective battery clusters 30. Of course, the accommodating cavity 201 may also be a plurality of partitioned cavities formed by partitioning via partition plates. The control box 10 and the battery clusters 30 may be located in the same partitioned cavity, or may be located in different partitioned cavities.

As shown in FIG. 2, the number of the battery clusters 30 included in the energy storage apparatus 100 may be two. Of course, as shown in FIG. 7, the number of the battery clusters 30 included in the energy storage apparatus 100 may be four. In some embodiments, the number of the battery clusters 30 included in the energy storage apparatus 100 may also be three or more, and can specifically be determined according to the energy density of the energy storage apparatus 100.

Each battery cluster 30 may include one battery 31, or may include at least two batteries 31. When at least two batteries 31 are included, the respective batteries 31 may be connected in series, in parallel, or in a hybrid connection formed by series and parallel connection.

When the battery cluster 30 includes at least two batteries 31, the number of the batteries 31 may be two, three, or more, and can specifically be determined according to the capacity of the batteries 31 and the required energy density of the energy storage apparatus 100.

The interface of the battery cluster 30 may include an overall positive interface and an overall negative interface. When the battery cluster 30 includes one battery 31, the interfaces of the battery cluster 30 may be a positive electrode interface and a negative electrode interface of the one battery 31. When the battery cluster 30 includes at least two batteries 31, the interfaces of the battery cluster 30 may be an overall positive interface and an overall negative interface of a whole formed by electrically connecting the respective batteries 31 of the battery cluster 30.

The number of the control boxes 10 included in the energy storage apparatus 100 may be one as shown in FIG. 2, and in this way, the number of the control modules 12 included in the control box 10 may be greater than or equal to the number of the battery clusters 30. Each battery cluster 30 may be electrically connected to the connection terminal 122 of one of the control modules 12, so as to control connection/disconnection of the battery cluster 30.

Of course, as shown in FIG. 7, the number of the control boxes 10 included in the energy storage apparatus 100 may also be n, where n is greater than or equal to 2, for example, n=4. In this case, the number of the control modules 12 included in each control box 10 may be two, three, or more. Specifically, each battery cluster 30 may be electrically connected to the connection terminal 122 of one of the control modules 12.

The control boxes 10 and the battery clusters 30 may be arranged in a stacked manner, or may be arranged in a separated manner. The control box 10 may be disposed at one end of the connected battery clusters 30, or may be clamped and disposed between two adjacent battery clusters 30.

In the energy storage apparatus 100 according to an embodiment of the present application, since the energy storage apparatus 100 includes the control box 10 according to the aforementioned embodiments and at least two battery clusters 30, and since a plurality of control modules 12 are disposed in the cavity of the control box 10, the control box can be simultaneously connected to the at least two battery clusters 30 in the energy storage apparatus 100 in a one-to-one manner via the different control modules 12, without the need to provide one control box 10 correspondingly for each battery cluster 30. Under the condition of the same number of battery clusters 30, the energy storage apparatus 100 according to an embodiment of the present application can reduce the number of applied control boxes 10, thereby reducing the volume of the energy storage apparatus 100 itself and improving the energy density thereof.

According to some embodiments of the present application, optionally, the number of the control boxes 10 is plural, and the respective battery clusters 30 electrically connected to the at least two control modules 12 of the same control box 10 are stacked along the same direction.

The number of the control boxes 10 may be two, three, or more.

The respective battery clusters 30 electrically connected to the at least two control modules 12 of the same control box 10 may be stacked along one of a height direction, a width direction, or a length direction of the cabinet 20.

The respective battery clusters 30 electrically connected to the at least two control modules 12 of the same control box 10 may be understood as: at least two battery clusters 30 or all battery clusters 30 among all the battery clusters 30 connected to the respective control modules 12 of the same control box 10 are stacked along the same direction.

In the energy storage apparatus 100 according to an embodiment of the present application, through the aforementioned arrangement, under the condition of the same specification and size of the cabinet 20, the energy storage apparatus 100 can be enabled to have a larger electric quantity, thereby further improving the energy density of the energy storage apparatus 100.

According to some embodiments of the present application, optionally, the at least two battery clusters 30 and the control box 10 are stacked along a height direction.

The height direction may be the same direction as the second direction Y. The height direction may be an arrangement direction of a base 202 and a top 203 of the energy storage apparatus 100. During use, the base 202 can be used for connecting to a support platform to support the energy storage apparatus 100.

The control box 10 may be located on one side of the battery clusters 30 in the height direction, or may be clamped between any two battery clusters 30.

In the energy storage apparatus 100 according to an embodiment of the present application, through the aforementioned arrangement, the arrangement of the respective battery clusters 30 connected to the respective control modules 12 of the same control box 10 and the connection and wiring requirements with the terminals 131 of the corresponding control box 10 are facilitated, and meanwhile, the size of the cabinet 20 can be effectively reduced, thereby ensuring the energy density of the energy storage apparatus 100.

According to some embodiments of the present application, optionally, the control box 10 is disposed, along a height direction, above, in the middle of, or below the at least two battery clusters 30.

The number of the battery clusters 30 connected to the control box 10 may be two, three, or more.

The expression "above the at least two battery clusters 30" may be understood as: a side of the at least two battery clusters 30 facing the top 203 of the cabinet 20.

The expression "below the at least two battery clusters 30" may be understood as: a side of the at least two battery clusters 30 facing the base 202 of the cabinet 20.

The expression "in the middle of the at least two battery clusters 30" may be understood as: the control box 10 being clamped between any two battery clusters 30.

In the energy storage apparatus 100 according to an embodiment of the present application, through the aforementioned arrangement, the layout of the battery clusters 30 and the control box 10 within the energy storage apparatus 100 is made compact, and the length of the connection lines between the battery clusters 30 and the terminals 131 of the control box 10 can be shortened.

According to some embodiments of the present application, there is further provided an electrical system, including the aforementioned energy storage apparatus 100. The electrical system may be a device or system such as a power station.

According to some embodiments of the present application, referring to FIG. 3 and FIG. 6, an embodiment of the present application provides a control box 10, including a square box 11, two control modules 12, and wiring assemblies 13 provided in a one-to-one correspondence with the two control modules 12, where the respective control modules 12 are disposed within the box 11, the wiring assemblies 13 may be disposed on a box wall. Each control module 12 includes a switch assembly 121, a connection terminal 122 electrically connected to the switch assembly 121, a third switch 124, a pre-charging branch 123, a current detector 125, and a first relay 126. The switch assembly 121 includes a first switch 1211 and a second switch 1212, and the connection terminal 122 includes a first connection port 1221 and a second connection port 1222 connected to the first switch 1211, and a third connection port 1223 and a fourth connection port 1224 connected to the second switch 1212, the first switch 1211 being used for controlling connection/disconnection between the first connection port 1221 and the second connection port 1222, and the second switch 1212 being used for controlling connection/disconnection between the third connection port 1223 and the fourth connection port 1224. The third switch 124 is connected in parallel with the first switch 1211, the pre-charging branch 123 is connected in parallel with the second switch 1212, and the pre-charging branch 123 includes a pre-charging resistor 1231 and a fourth switch 1232 that are arranged in series. The current detector 125 is connected to the first switch 1211 and the first relay 126, and the first relay 126 is connected to the second connection port 1222. The box wall may be in the shape of a square shell as a whole, and the box wall includes a first wall surface 111, where the first wall surface 111 may be one wall surface of the box wall in the shape of a square shell, optionally a plane. The terminal 131 of the wiring assembly 13 is located on the first wall surface 111 and at least partially extends into the box 11, so as to be connected to the connection terminal 122. Each terminal 131 includes two first terminal portions 131a and two second terminal portions 131b, one of the two first terminal portions 131a being connected to the first connection port 1221, and the other being connected to the third connection port 1223. One of the two second terminal portions 131b is connected to the second connection port 1222 and the other is connected to the fourth connection port 1224, the two first terminal portions 131a are used for connecting to the interface terminal of the battery cluster 30, and the two second terminal portions 131b are connected to an external device. The first terminal portions 131a of the respective wiring assemblies 13 are disposed on the same side of the box 11 along a first direction X and are distributed at intervals along a second direction Y, the first direction X being perpendicular to the second direction Y. The box 11 has a first side wall 1111 and a second side wall 1112 disposed opposite to each other in the first direction X, the respective first terminal portions 131a are distributed at intervals along the second direction Y, an interface of each first terminal portion 131a being disposed facing the first side wall 1111, and along the second direction Y and from one side toward the other side, minimum perpendicular distances from the respective first terminal portions 131a to the second side wall 1112 gradually decreasing, and along the second direction Y, the first terminal portions 131a connected to the first connection ports 1221 and the first terminal portions 131a connected to the third connection ports 1223 being alternately disposed. The second terminal portions 131b of the respective wiring assemblies 13 are disposed on a side of the box 11 opposite to the respective first terminal portions 131a along the first direction X, the respective second terminal portions 131b are distributed at intervals along the first direction X, and two adjacent second terminal portions 131b are disposed in a staggered manner in the second direction Y. The box 11 has a third side wall 1113 and a fourth side wall 1114 disposed opposite to each other in the second direction Y, where interfaces of the respective second terminal portions 131b are disposed facing the fourth side wall 1114, a minimum perpendicular distance from the second terminal portion 131b connected to the second connection port 1222 to the third side wall 1113 is H1, and a minimum perpendicular distance from the second terminal portion 131b connected to the fourth connection port 1224 to the third side wall 1113 is H2, an absolute value of a difference between H1 and H2 being greater than zero.

According to some embodiments of the present application, referring to FIG. 7, an embodiment of the present application provides an energy storage apparatus 100, including a square cabinet 20, four battery clusters 30, and two control boxes 10, where the control boxes 10 may be the control box 10 provided in the aforementioned embodiments, which will not be described in detail herein. The cabinet 20 includes a base 202 and a top 203 along a height direction thereof. Every two of the four battery clusters 30 form one group, and each control box 10 includes two control modules 12 and is connected in a one-to-one manner with the two battery clusters 30 of the same group. The two battery clusters 30 located in the same group and the control box 10 connected to the two battery clusters are stacked along the height direction of the cabinet 20, and the control box 10 may be located at one end of the connected two battery clusters 30 in the height direction. Each battery cluster 30 may include four batteries 31, where the four batteries 31 may be stacked along the height direction, and the four batteries 31 of the same battery cluster 30 may be connected in series with each other and then electrically connected to one control module 12 of the corresponding control box 10 via a first terminal. The two control boxes 10 may be located on the same side of the connected battery clusters 30. Through the aforementioned arrangement, there is no need to provide one control box 10 for each battery cluster 30, thereby reducing the number of the control boxes 10 used in the energy storage apparatus 100, which can effectively reduce the dimension of the energy storage apparatus 100 in the height direction of the cabinet 20, thereby reducing the volume of the energy storage apparatus 100, improving the energy density thereof, and facilitating the standardized design of the external dimensions of the energy storage apparatus 100.

Although the present application has been described with reference to the preferred embodiments, various modifications can be made thereto and components therein can be replaced with equivalents without departing from the scope of the present application. In particular, as long as no structural conflict exists, the various technical features mentioned in the respective embodiments can all be combined in any manner. The present application is not limited to the specific embodiments disclosed herein, but includes all technical solutions falling within the scope of the claims.

## Claims

1. A control box, comprising:
at least two control modules, the control modules being used for controlling battery status of battery clusters, the control modules each comprising a switch assembly and a connection terminal electrically connected to the switch assembly, wherein the switch assembly is configured to control connection/disconnection of the connection terminal; and
wiring assemblies, the wiring assemblies being used for connecting the control modules to the battery clusters, the wiring assemblies being provided corresponding to the control modules, and the wiring assemblies each comprising a terminal, wherein the terminals are respectively electrically connected to the connection terminals.

2. The control box according to claim 1, wherein the control box further comprises a box, the control modules being disposed within the box, and the wiring assemblies being disposed on a box wall.

3. The control box according to claim 2, wherein the box wall has a first wall surface, and the terminals of the respective wiring assemblies are all disposed on the first wall surface.

4. The control box according to claim 2 or 3, wherein the connection terminal comprises a first connection port, a second connection port, a third connection port, and a fourth connection port that are connected to the switch assembly, and the switch assembly is configured to control connection/disconnection between the first connection port and the second connection port and to control connection/disconnection between the third connection port and the fourth connection port, the first connection port and the third connection port being used for connecting to the battery cluster, and the second connection port and the fourth connection port being used for connecting to an external device.

5. The control box according to claim 4, wherein the terminal comprises a first terminal portion and a second terminal portion, the first terminal portion being used for connecting the control module to the battery cluster, and the second terminal portion being used for connecting the control module to the external device.

6. The control box according to claim 5, wherein the first terminal portions of the respective wiring assemblies are disposed on the same side of the box along a first direction and are distributed at intervals along a second direction, the first direction intersecting with the second direction.

7. The control box according to claim 6, wherein the box has a first side wall and a second side wall disposed opposite to each other in the first direction, an interface of each of the first terminal portions being disposed facing the first side wall, and along the second direction and from one side toward the other side, minimum perpendicular distances from the respective first terminal portions to the second side wall gradually decreasing.

8. The control box according to claim 6 or 7, wherein the first connection port and the third connection port of each of the control modules are separately connected with the first terminal portions, and along the second direction, the first terminal portion connected to the first connection port and the first terminal portion connected to the third connection port are alternately disposed.

9. The control box according to any one of claims 6 to 8, wherein the second terminal portions of the respective wiring assemblies are disposed on a side of the box opposite to the respective first terminal portions along the first direction, the respective second terminal portions are distributed at intervals along the first direction, and two adjacent ones of the second terminal portions are disposed in a staggered manner in the second direction.

10. The control box according to claim 9, wherein the second connection port and the fourth connection port of each of the control modules are separately connected with the second terminal portions, and the box has a third side wall and a fourth side wall disposed opposite to each other in the second direction, wherein interfaces of the respective second terminal portions are disposed facing the fourth side wall, a minimum perpendicular distance from the second terminal portion connected to the second connection port to the third side wall is H1, and a minimum perpendicular distance from the second terminal portion connected to the fourth connection port to the third side wall is H2, an absolute value of a difference between H1 and H2 being greater than zero.

11. The control box according to any one of claims 4 to 10, wherein the switch assembly comprises a first switch and a second switch, the first switch being connected to the first connection port and the second connection port, and the second switch being connected to the third connection port and the fourth connection port.

12. The control box according to claim 11, wherein each of the control modules further comprises a pre-charging branch and a third switch, the third switch being connected in parallel with the first switch, the pre-charging branch being connected in parallel with the second switch, and the pre-charging branch comprising a pre-charging resistor and a fourth switch that are arranged in series.

13. The control box according to any one of claims 1 to 12, wherein each of the control modules further comprises a current detector, the current detector being used for detecting current information of a loop in which the control module is located;
and/or each of the control modules further comprises a first relay, the first relay being used for controlling connection/disconnection of the loop in which the control module is located.

14. An energy storage apparatus, comprising:
a cabinet having an accommodating cavity;
battery clusters, at least two of the battery clusters being disposed in the accommodating cavity, and each of the battery clusters comprising an interface terminal; and
the control box according to any one of claims 1 to 13, each of the battery clusters being provided corresponding to one of the control modules, and the interface terminal of the battery cluster being electrically connected to the connection terminal of the correspondingly provided control module.

15. The energy storage apparatus according to claim 14, wherein the number of the control boxes is plural, and the respective battery clusters electrically connected to the at least two control modules of the same control box are stacked along the same direction.

16. The energy storage apparatus according to claim 14 or 15, wherein the at least two battery clusters and the control box are stacked along a height direction.

17. The energy storage apparatus according to any one of claims 14 to 16, wherein the control box is disposed, along a height direction, above, in the middle of, or below the at least two battery clusters.

18. An electrical system, comprising the energy storage apparatus according to any one of claims 14 to 17.
